(19) Europäisches Patentamt

European Patent Office

Office européen des brevets

(11) EP 2 179 904 A1

(12) **EUROPEAN PATENT APPLICATION**

(43) Date of publication:
28.04.2010 Bulletin 2010/17

(21) Application number: 09174055.5

(22) Date of filing: 26.10.2009

(51) Int Cl.:
*B60W 20/00* (2006.01)   *B60K 6/48* (2007.10)
*B60K 6/365* (2007.10)   *B60K 6/40* (2007.10)
*B60K 11/02* (2006.01)   *B60K 17/28* (2006.01)
*B60K 25/06* (2006.01)   *B60K 1/02* (2006.01)
*F01P 7/04* (2006.01)   *B60W 10/06* (2006.01)
*B60W 10/08* (2006.01)

(84) Designated Contracting States:
AT BE BG CH CY CZ DE DK EE ES FI FR GB GR
HR HU IE IS IT LI LT LU LV MC MK MT NL NO PL
PT RO SE SI SK SM TR

(30) Priority: 24.10.2008 IT TO20080788

(71) Applicant: CNH Italia S.p.A.
41100 Modena (IT)

(72) Inventors:
• Morselli, Ricccardo
41057 Modena (IT)
• Sedoni, Enrico
41100 Modena (IT)

(74) Representative: CNH IP Department
Patent Department,
Leon Claeysstraat 3A
8210 Zedelgem (BE)

(54) **Engine system**

(57)   An engine system (1) of an agricultural or indus-
trial utility vehicle comprises an internal combustion engine (2) having a first rotor (3), an electric motor-generator (4) having a second rotor (5), and a cooling fan (6)
having a third rotor (7). A planetary gearing system (8)
has a sun gear (9) coupled with the second rotor (5), a
planet carrier (10) coupled with the first rotor (3), and a
ring gear (11) coupled with the third rotor (7). The electric
power demand for the cooling fan (6) can be lowered.

Fig. 1

EP 2 179 904 A1

**Description**

**Background of the Invention**

The present invention relates to an engine system.

Specifically, though not exclusively, the invention can be usefully applied in a vehicle such as an agricultural or industrial utility vehicle.

In particular the present invention relates to an engine system comprising an internal combustion engine and an electric motor-generator connected to the engine and adapted to provide electric power which can be used to operate one or more actuators, e.g. the implements of an agricultural or industrial utility vehicle.

The prior art includes engine systems, e.g. vehicle engine systems, each comprising an internal combustion engine, an electric generator driven by the engine, an electric motor and an actuator, such as a cooling fan, mechanically driven by the internal combustion engine or by the electric motor. However, on the one hand when the actuator (e.g. cooling fan) is directly driven by the engine, it often operates in a low efficiency condition, while on the other hand when the actuator is driven by the electric motor, its electric power demand is large. As an example, agricultural/industrial utility vehicles of known type are normally provided with implements that may benefit from an electric power supply from the vehicle to increase both efficiency and performance. The availability of electric power on board of the vehicle (e.g. a tractor) allows the use of electric actuators (in place of hydraulic or mechanical actuators) on both the implement and the vehicle. As an example, the cooling fan which is normally operative in an agricultural/industrial utility vehicle, may be advantageously driven by electric power. However a pure electric cooling fan consumes a lot of electric power.

The prior art includes the U.S. Patent No. US 7,134,406 B1 providing a cooling fan control system for a cooling system associated with a machine driven by an engine suitable for momentarily reducing cooling fan load on the engine when the machine encounters sudden loads, wherein the system comprises an engine, a controllable fan drive, a sensor indicating engine speed, and a controller that reduces fan load when engine speed is decreasing faster than a maximum rate and is lower than a desired speed, and re-engages fan load when engine speed is approximately equal to the desired speed or when a maximum disengagement time has elapsed.

The U.S. Patent Publication No. US 2008/0121195 A1 discloses a vehicle engine system having an internal combustion engine, a cooler, an electric generator mechanically driven by the engine, a fan adjacent to the cooler for moving air through the cooler, and an electric motor powered by the electrical energy generated by the generator and mechanically driving the fan.

**Summary of the Invention**

An aim of the present invention is to provide an engine system in which the efficiency of the operation of an actuator is increased.

An advantage of the invention is to provide an efficient engine system for use in a vehicle, such as an agricultural or industrial utility vehicle.

A further advantage of the invention is to provide an engine system in which an actuator (e.g. a cooling fan) can be effectively and efficiently driven in combination by an internal combustion engine and an electric motor.

A further advantage is to enable a desired operation speed of an actuator to be accurately and reliably regulated irrespective of the operation condition of an internal combustion engine configured to at least partly drive the actuator.

A further advantage is to provide an engine system in which the electric power generated by an electric generator operatively connected to an internal combustion engine can be efficiently used to drive a plurality of actuators at least one of which is mechanically connected to the internal combustion engine.

A further advantage is to provide an engine system in which an electric motor-generator, which is mechanically connected both to an internal combustion engine and to an actuator, can effectively and efficiently operate as a motor driving the actuator in certain operative conditions and as a generator generating electric power usable by other actuators in other operative conditions.

Another advantage of the invention is that it provides an engine system which comprises at least one internal combustion engine and an electric generator connected to a plurality of electric actuators and which will enable a high efficiency to be attained with a compact and simple type of construction.

A further advantage of the invention consists in the fact that the efficiency of the engine system can be maximized by appropriately selecting the configuration of a planetary gearing system that interconnects an electric motor-generator and an internal combustion engine.

These aims and advantages and more besides, which will better emerge from the description that follows, are attained by an engine system according to one or more of the accompanying claims.

According to the invention an engine system is provided comprising an internal combustion engine having a first rotor, an electric motor-generator having a second rotor, an actuator having a third rotor, and a motion transmission system having at least three rotatable elements, **characterized in that** said first rotor being coupled with said motion transmission system through a first one of said at least three rotatable elements, said second rotor being coupled with said motion transmission system through at least one of said at least three rotatable elements, said third rotor being coupled with said motion transmission system through a third one of said at least three rotatable elements.

The second rotor may be coupled with said motion transmission system through said first rotatable element or through a second one of said at least three rotatable elements.

The motion transmission system comprises a variable transmission system in which a transmission ratio between said first rotatable element and said third rotatable element varies as a function of a rotating speed of a second one of said at least three rotatable elements.

The engine system according to the invention may further comprise a controller configured to control said second rotor according to a desired value or a range of values of a speed of said third rotor.

In addition the engine system according to the invention may further comprise a controller configured to control said electric motor-generator on the basis of one or more signals indicative of the speed of said first rotor and/or of said third rotor.

Furthermore, the engine system according to the invention may comprise a controller configured to perform the steps of receiving a value indicative of a transmission ratio between said first rotor and said third rotor and controlling said electric motor-generator on the basis of said transmission ratio value.

The motion transmission system may comprise a planetary gearing system, said at least three rotatable elements including a sun gear, a planet carrier and a ring gear, said planet carrier holding one or more planet gears meshed with said sun gear and with said ring gear.

Said first rotor may be coupled to said ring gear, said second rotor may be coupled to said sun gear, and said third rotor may be coupled to said planet carrier.

In a further version of the system according to the invention, said first rotor may be coupled to said planet carrier, said second rotor may coupled to said sun gear, and said third rotor may be coupled to said ring gear.

In a still further version of the system according to the invention said first rotor may be coupled to said sun gear, said second rotor may be coupled to said planet carrier, and said third rotor may be coupled to said ring gear.

Said second rotor may be mechanically interposed between said third rotor and said motion transmission system.

In a version of the system according to the invention said second rotor and said third rotor are configured to form a single rotor coupled with said motion transmission system.

The system according to the invention may comprise a first electric generator configured to be mechanically driven by said third rotor and also to operate as a motor driving said actuator.

Said first electric generator may be mechanically interposed between said actuator and said motion transmission system.

The rotor of said first electric generator may coincide with said third rotor.

Said first electric generator may be electrically connected to said electric motor-generator.

Said first electric generator may be connected to said electric motor-generator through at least a first DC-AC converter, a first DC bus and a second DC-AC converter.

One or more user connections may be electrically connected to said first electric generator.

At least one of said one or more user connections may be electrically connected to said first electric generator through at least a first DC-AC converter, a first DC bus and a third DC-AC converter.

The system according to the invention may further comprise a second electric generator which is configured to be driven by said internal combustion engine and which is electrically connected to said electric motor-generator.

Said second electric generator may be connected to said electric motor-generator through at least a first DC-AC converter, a first DC bus and a second DC-AC converter.

The system according to the invention may comprise one or more user connections electrically connected to said second electric generator.

At least one of said one or more user connections may be connected to said second electric generator through at least a first DC-AC converter, a first DC bus and a third DC-AC converter.

In addition, at least one of said one or more user connections may be directly connected to said second electric generator with no interposition of any AC-DC converter.

The system according to the invention may further comprise at least one clutch or brake operatively connected to said second rotor.

The system according to the invention may comprise at least one electrical energy storing unit electrically connected to said electric motor-generator.

Said at least one electrical energy storing unit may be connected to said electric motor-generator through at least a first DC-AC converter, a first DC bus, a first DC-DC converter, and a second DC bus having a lower voltage than said first DC bus.

The motion transmission system and said first, second and third rotors may be configured, for instance, to have a transmission ratio from said first rotor to said third rotor, when said second rotor does not rotate, comprised between 1,2 and 2,0 or between 1,4 and 1,8.

Said actuator may comprise a cooling device.

Further characteristics and advantages of the present invention will better emerge from the detailed description that follows, of some embodiments of the invention, illustrated by way of non-limiting example in the accompanying figures of the drawings.

**Brief Description of the Drawings**

The description will follow herein below, with reference to the figures of the drawings, provided as a non-limiting example.

Figure 1 is a schematic diagram of an engine system according to a first embodiment of the invention.

Figure 2 is a schematic diagram of an engine system according to a second embodiment of the invention.

Figure 3 is a schematic diagram of an engine system according to a third embodiment of the invention.

Figure 4 is a schematic diagram of an engine system according to a fourth embodiment of the invention.

Figure 5 is a diagram representing the power requested by the cooling fan of the engine systems of figures 1 to 3 as a function of the fan rotation speed.

Figure 6 is a diagram representing the power requested or generated by the electric motor-generator of the engine system of figure 1 as a function of both the cooling fan rotation speed and the internal combustion engine rotation speed when the transmission ratio between the planet carrier and the ring gear (annulus) of the planetary gearing system is equal to 1,6667.

Figure 7 is a diagram similar to the one of Figure 6 when the transmission ratio between the planet carrier and the ring gear (annulus) of the planetary gearing system is equal to 1,5.

**Detailed Description**

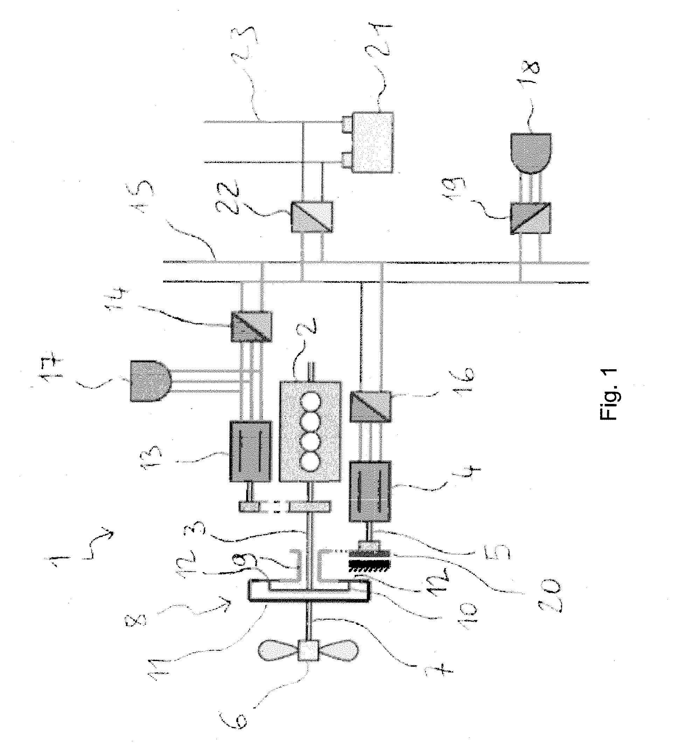

With reference to the above-cited Figure 1 of the drawings, 1 denotes in its entirety an engine system, particularly an engine system for an agricultural or industrial utility vehicle (not shown).

The engine system 1 comprises an internal combustion engine 2 having a first rotor 3, an electric motor-generator 4 having a second rotor 5, and an actuator 6 having a third rotor 7. Each rotor 3, 5, 7 may comprise a rotor shaft. In this embodiment the three rotors 3, 5, 7 are three distinct rotors. The actuator 6 may comprise a cooling fan, as in this embodiment, or other devices of known type.

The engine system 1 comprises a planetary gearing system 8 coupled with the three rotors. In this embodiment the three rotors 3, 5, 7 are coupled, respectively, with three distinct rotatable elements of the planetary gearing system 8. Indeed, the planetary gearing system 8 comprises three rotatable elements, namely a sun gear 9, a planet carrier 10 and a ring gear 11 (which may also be called annulus). The planet carrier 10 holds one or more planet gears 12 (e.g. three or four planet gears) meshed with the sun gear 9 and with the ring gear 11. The sun gear 9 comprises a central gear with outward-facing teeth that mesh with the planet gear or gears 12. The ring gear 11 comprises an outer ring with inward-facing teeth that mesh with the planet gear or gears 12.

The planetary gearing system 8 may be configured and connected to the three rotors 3, 5, 7 to have, for instance, a transmission ratio from the planet carrier 10 (solidly connected to the first rotor 3 and having the same rotation speed thereof) to the ring gear 11 (solidly connected to the third rotor 7 and having the same rotation speed thereof), when the sun gear 9 (mechanically connected to the second rotor 5) does not rotate, comprised between 1,2 and 2,0 or between 1,4 and 1,8 (e.g. 1,5 or 1,6667).

In this embodiment the first rotor 3 (i.e. the rotor of the internal combustion engine 2) is coupled with the planet carrier 10, the second rotor 5 (i.e. the rotor of the electric motor generator 4) is coupled with the sun gear 9 (optionally by means of a rotary to rotary motion transmission device, e.g. a pulley transmission), and the third rotor 7 (i.e. the rotor of the cooling actuator 6) is coupled with the ring gear 11 (annulus).

The engine system 1 comprises an electric generator 13 mechanically coupled to the first rotor 3. The electric generator 13 may be configured to be driven by the internal combustion engine 2, optionally through a mechanical transmission (e.g. a pulley transmission). The electric generator 13 may be electrically connected to the electric motor-generator 4. This electrical connection comprises, optionally, at least a first DC-AC converter 14, a first DC bus 15 and a second DC-AC converter 16. The first DC bus 15 may comprise an high voltage DC bus (e.g. 120V, 300V, 500V depending on the application). The engine system 1 comprises, optionally, one or more user connections 17, 18 which are adapted to be connected to one or more electric users (not shown, e.g. the implements of a tractor or other agricultural or industrial utility vehicle) and which are electrically connected to the electric generator. Each user connection 17, 18 may comprise a connection (e.g. a plug) adapted to connect an electric device (e.g. one of the implements of the agricultural/industrial utility vehicle) with the engine system 1. The electric generator 13 may be directly connected with the user connection 17 (e.g. a three-phase plug, as in the specific embodiment of Figure 1). In other words, the electric generator 13 may be connected with the three-phase plug only through the at least three conductors of the three-phase electric power system, particularly with no interposition of any electric device or machine, such as a DC-AC converter. It is noted that in this case desired values of the three-phase power parameters (e.g. 380VAC-50Hz or 220 VAC-50Hz), or single phase power, if the case may be, can be obtained only when the internal combustion engine 2 runs at a constant predefined value of rotation speed (e.g. 2000 rpm). It is further noted that the user connection 17 (three-phase plug), which is directly connected to the electric generator 13, has advantageously a very high efficiency.

The engine system 1 comprises, optionally, one or more user connections (e.g. the user connection 18) connected to the electric generator 13 through a DC-AC converter - which may be the first DC-AC converter 14 arranged between the electric generator 13 and the electric motor-generator 4 -, a DC bus - which may be the first DC bus 15 connecting the electric generator 13 with the electric motor-generator 4 -, and a third DC-AC converter 19. In particular in the embodiment of Figure 1, the user connection 18 comprises a plug (e.g. a 380V or 220V plug) adapted for the connection with one or more implements of the utility vehicle. The high voltage DC bus 15 allows to supply electric power to one or more electric driven auxiliary devices.

The engine system 1 comprises, optionally, at least one clutch and/or brake 20 operatively connected to the second rotor 5. A clutch may be configured to connect the rotor 5 to any other rotor in the system by means of proper gears and shafts, for instance to have the motor 4 to rotate at constant speed driven by the engine 2. A brake may be configured to slow or stop the rotation of the second rotor 5. A version of the engine system may comprise the brake, another version the clutch, a further version both the clutch and the brake. Thanks to a clutch, it is possible to avoid the use of the electric motor to drive the actuator (cooling fan) in the most common working, whereby the fuel efficiency is further improved.

The engine system 1 comprises, optionally, an energy storing unit 21 (e.g. a battery) electrically connected to the electric motor-generator 4. The electric motor-generator 4 may be connected to the (electrical) energy storing unit 21 through a DC-AC converter (e.g. the same DC-AC converter 16 connecting the electric motor-generator 4 with the electric generator 13), a DC bus (e.g. the same DC bus 15 connecting the electric motor-generator 4 with the electric generator 13), a DC-DC converter 22, and a second DC bus 23 having a lower voltage (e.g. 12V) than the first DC bus 15. The (electrical) energy storing unit 21 has the same low voltage of the second DC bus 23. The DC-DC converter 22 may be properly configured in order to be used to take power from the energy storing unit 21 to start the internal combustion engine 2. A further starter means is then not necessary.

The engine system 1 may comprise a controller (of known type, e.g. a CPU, not shown) configured to control the electric motor-generator 4 in such a way that a speed of the third rotor 7 has a desired value or falls within a desired range of values. The desired speed value of the third rotor 7 is selected in order to operate the actuator 6 at a desired condition. In this specific case the controller controls the electric motor-generator 4 in such a way that the cooling fan rotates at the preferred speed value or within the preferred range of speed values.

The controller is connected to the electric motor-generator 4. A sensor means (of known type and not shown) may be provided to detect the speed rotation of the first rotor 3 and/or of the second rotor 5 and/or of the third rotor 7. The controller may be connected to the sensor means to receive one or more signals indicative of the speed rotation of the first rotor 3 and/or of the second rotor 5 and/or of the third rotor 7. The controller may be configured to control the speed rotation of the second rotor 5 (connected to the electric motor-generator 4) on the basis of the signals indicative of the speed rotation of the first rotor 3 and/or of the third rotor 7 and taking into account the transmission ratio of the planetary gearing system 8. In particular the controller may be configured to control the speed rotation of the second rotor 5 based the following formula:

$$\omega_M = \frac{\omega_F - K_D \omega_D}{K_M} \qquad (1)$$

$\bullet_M$ =     rotation speed of the second rotor 5 (electric motorgenerator 4) connected in this case to the sun gear 9;

$\bullet_F$ =     rotation speed of the third rotor 7 (actuator/cooling fan 6) connected in this case to the ring gear 11;

$\bullet_D$ =     rotation speed of the first rotor 3 (internal combustion engine 2) connected in this case to the planet carrier 10;

$K_D$ =     transmission ratio between the planet carrier 10 connected in this case to the first rotor 3 (internal combustion engine 2), and the ring gear 11 connected in this case to the third rotor 7 (actuator/cooling fan 6);

$K_M$ -     transmission ratio between the second rotor 5 (electric motor-generator 4) connected in this case to the sun gear 9, and the third rotor 7 (actuator/cooling fan 6) connected in this case to the ring gear 11, whereby $T_M = K_M T_F$ $T_M$ = torque applied on the second rotor 5 (electric motor-generator 4); $T_F$ = torque applied on the third rotor 7 (actuator/cooling fan 6).

Therefore the controller will control the electric motor-generator 4 (second rotor 5) in order to operate the actuator 6 (cooling fan) at a desired rotation speed $\bullet_F$ in such a way that the electric power $P_M$ generated or used by the electric motor-generator 4 is equal to

$$P_M = T_M \omega_M = T_F \left( \omega_F - K_D \omega_D \right) \qquad (2)$$

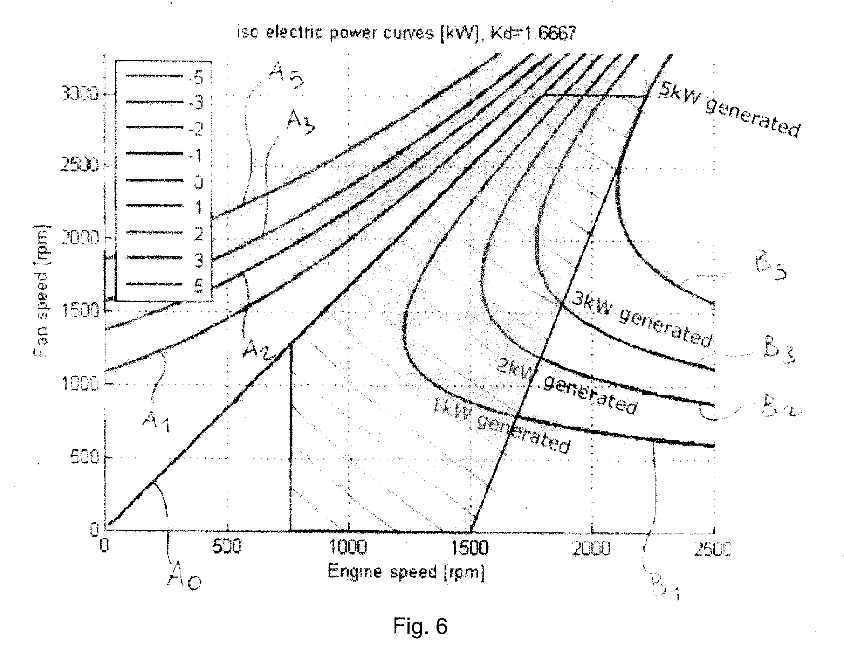

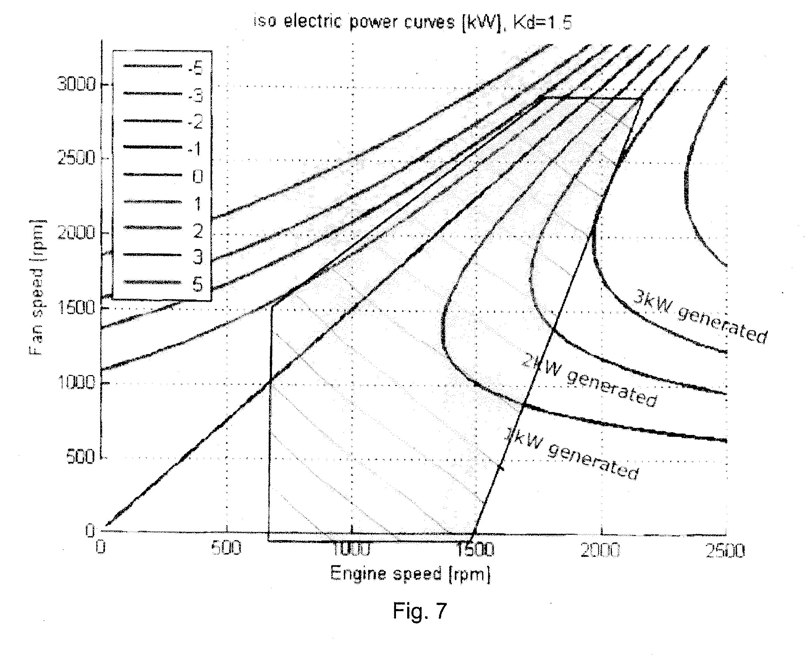

When the electric power $P_M$ is positive, the electric motor-generator 4 works as a motor; when the electric power $P_M$ is negative, the electric motor-generator 4 works as a generator. Figures 6 and 7 illustrate how the electric power $P_M$ applied to the second rotor 5 (electric motor-generator 4) can change as a function of both the third rotor speed $\bullet$F (cooling fan speed) and the first rotor speed $\bullet_D$ (internal combustion engine speed). Figure 6 is related to a planetary gearing system 8 having $K_D = 1,6667$, and Figure 7 is related to a planetary gearing system 8 having $K_D = 1,5$.
A straight line $A_0$ indicates the condition of $P_M = 0$. The straight line $A_0$ corresponds to the equation

$$\omega_F = K_D \omega_D \qquad (3)$$

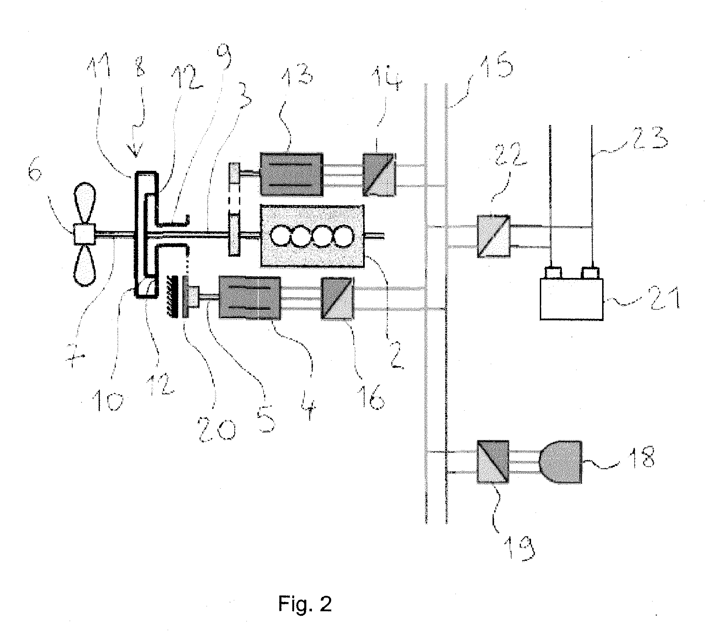

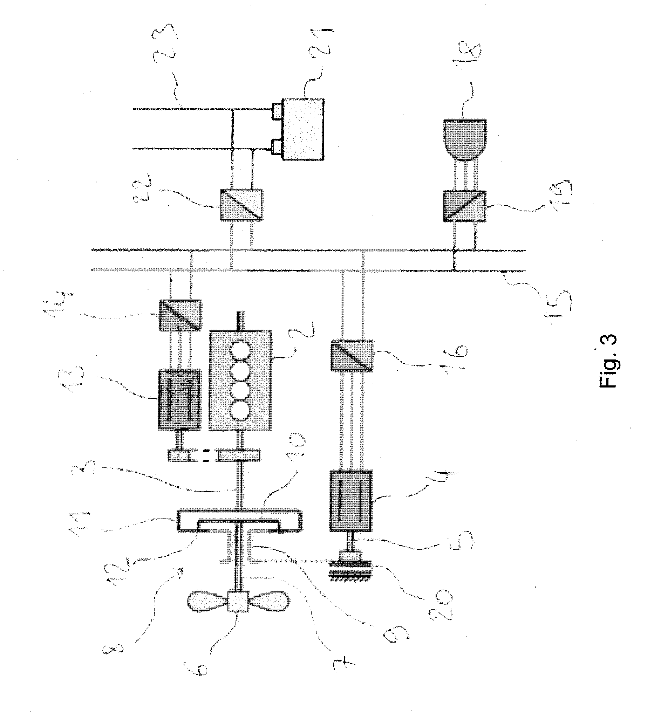

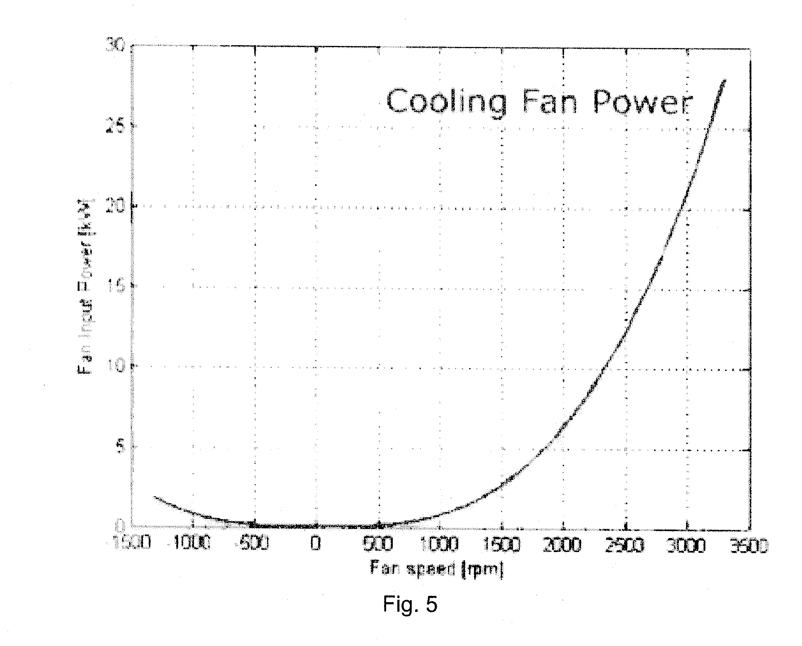

Indeed if equation (3) is applied to equation (1) the result is $\bullet_F = 0$ and thus $P_M = 0$.
The area of the diagram (figures 6 and 7) below the straight line $A_0$ corresponds to working conditions of $\bullet_F <$ 0 and then $P_M < 0$ (electric power generated), while the area above the straight line $A_0$ corresponds to working conditions of $\bullet_F > 0$ and then $P_M > 0$ (electric power demanded). In particular the curves $A_1$, $A_2$, $A_3$, $A_5$ correspond to working conditions in which the electric motor-generator 4 consumes, respectively, 1kW, 2kW, 3kW, and 5kW, while the curves $B_1$, $B_2$, $B_3$, $B_5$ correspond to working conditions in which the electric motor-generator 4 generates, respectively, 1kW, 2kW, 3kW, and 5kW.
The two hatched regions of Figures 6 and 7 correspond to the operating conditions of interest or, in other words, the operating conditions in which the internal combustion engine 2, the actuator 6 (cooling device) and the electric motor-generator 4 work in the preferred situations of effectiveness and efficiency.
The controller may be connected to the internal combustion engine 2. The controller may be configured to control the internal combustion engine 2 according to one or more input instructions received by an operator.
According to this specific embodiment, an actuator is connected to an electric motor through a planetary gearing system. In this way it is possible to reduce the electric power required by the actuator to have a proper operating condition (e.g. the desired fan speed). Thanks to the planetary gearing system (or other motion transmission system having at least three rotatable elements interconnected one to the other), a portion of the power needed by the actuator can come from the internal combustion engine.
An advantage of the system consists in that the mechanical power supplied by the internal combustion engine can be used by users (e.g. transmission, hydraulics, etc.) other than the actuator (e.g. cooling fan) according to the needs. As an example, the engine system above described allows a direct power boost of the internal combustion engine by simply letting the actuator (cooling fan) to freely rotate, whereby the power that is normally required by the actuator to rotate (in this specific case a cooling fan normally requires 10 to 25 kW, see Figure 5) is not asked to the internal combustion engine and then this available power can be used for other devices. As another example, the engine system may be used to change the engine load during transients in order to have smoother operations and higher efficiency, for instance to decrease the fan speed when the transmission load increases.
The transmission ratio of the planetary gearing system has been chosen in such a way that the electric motor-generator will work as a generator in the most common operative conditions. In this way a certain amount of electric power is available and moreover the total electric power demand on the further generator, which may be connected to the internal combustion engine, may be reduced.
In another embodiment (not shown) the controller may be configured to control the electric motor-generator 4 and the internal combustion engine 2 in such a way that a transmission ratio between the first rotor 3 (the rotor connected to the internal combustion engine 2) and the third rotor 7 (the rotor connected to the actuator 6) has a desired value or falls within a desired range of values.
The embodiment of Figure 2 differs from the one of Figure 1 in that the directly connected plug (user connection 17) is absent in Figure 2. The numbering of the various elements of Figure 2 is the same as in Figure 1.
The embodiment of Figure 3 differs from the one of Figure 2 in that the first rotor 3 (the rotor of the internal combustion engine 2) is connected to the ring gear 11 (annulus) and the third rotor 7 (the rotor of the actuator 6) is connected to the planet carrier 10. The numbering of the various elements of Figure 3 is the same as in Figure 2. The directly connected plug of Figure 1 may be applied to the embodiment of Figure 3.

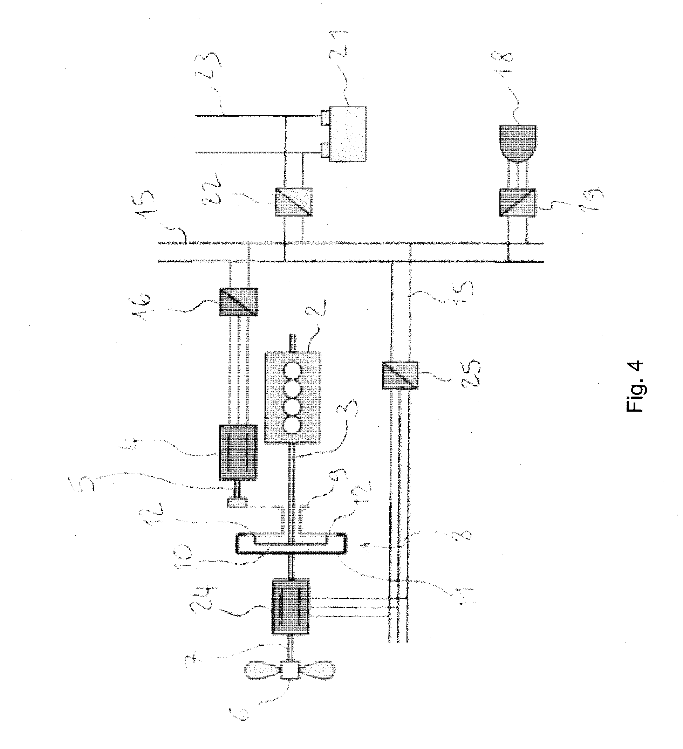

The embodiment of Figure 4 differs from the one of Figure 2 in that a further electric generator or motor-generator 24 is connected to the third rotor 7 (the rotor of the actuator 6). The numbering of the elements of Figure 4 which are analogous to the elements of Figure 2 is the same as in Figure 2. The further electric generator 24 is mechanically coupled to the third rotor 7. The further electric generator 24 may be coupled to the third rotor 7 so as to rotate at the same rotation speed of the actuator 6. The further electric generator 24 may be electrically connected to the electric motor-generator 4 connected to the sun gear 9. The further electric generator 24 may be connected to the electric motor-generator 4 through at least the first DC-AC converter 16, the first DC bus 15 and a further DC-AC converter 25. The further electric generator 24 may be electrically connected to one or more user connections 18. The further electric generator 24 may be connected to the user connection 18 through at least the further DC-AC converter 25, the first DC bus 15 and the third DC-AC converter 19. The further electric generator 24 is in practice an electric motor-generator configured and controlled to drive the third rotor 7 (actuator). The further electric motor-generator 24 is mechanically interposed between the actuator 6 and the planetary gearing system 8. In this case the further electric generator 24 has a rotor coinciding with the third rotor 7. The further electric motor-generator 24 is electrically connected to the electric motor-generator 4 which may be connected to the sun gear 9 of the planetary gearing system 8.

The directly connected plug of Figure 1 may be applied to the embodiment of Figure 4. The further electric motor-generator 24 of Figure 4 may be applied to the embodiment of Figure 3 (in this case the electric generator 13 connected to the first rotor 3 may be absent). The relative arrangement of the planetary gearing system 8 and the three rotors 3, 5, 7, described in relation to Figure 3, may be applied to the embodiment of Figure 4.

A further embodiment (not shown) comprises the embodiment of Figure 4 in which the electric motor-generator 4 is absent and the AC-DC converter 16 directly connected to the electric motor-generator may be absent. In this embodiment the electric motor-generator 24 directly connected (connected with no interposition of the planetary gearing system 8) to the rotor of the actuator 6 may be controlled in such a way to drive the actuator (cooling fan) at a desired rotation speed and to consume/generate electric power according to the various operating conditions, particularly the conditions determined by the operation of the internal combustion engine 2.

In this further (not shown) embodiment and in the embodiment of Figure 4, the second rotor (the rotor of the motor-generator 24) is mechanically interposed between the third rotor 7 and the planetary gearing system 8. In this further embodiment and in the embodiment of Figure 4 the second rotor and the third rotor are configured to form a single rotor coupled with the planetary gearing system 8. Both in this further embodiment and in the embodiment of Figure 4, the electric generator 13 of the embodiments of Figures 1 to 3 (mechanically connected to the first rotor 3) may be present.

In other embodiments the planetary gearing system of any one of the above described embodiments is modified in such a way that the first rotor 3 is coupled to the sun gear 9, the second rotor 5 is coupled to the planet carrier 10, and the third rotor 7 is coupled to the ring gear 11.

Figure 5 shows a curve that describes how the input power requested by the cooling fan (actuator 6) varies as a function of the fan speed (speed of the third rotor 7).

The following paragraph summarizes a list of advantages of the engine systems above described.

The connection between the actuator (cooling fan) and the internal combustion engine through a variable transmission, i.e. a transmission which can change through effective gear ratios between maximum and minimum values, allows to properly tune the power requested by the actuator (cooling power) whereby the fuel consumption associated to the actuator can be limited. Moreover the arrangement of a variable transmission between the actuator (cooling fan) and the electric motor driving the actuator allows the electric power demand for the actuator to be lowered. It is advantageously possible to perform a power boost of the internal combustion engine for few seconds by letting the actuator (cooling fan) to freely rotate, or by reducing its power demand. There is no need of an alternator in an engine system suitable for an agricultural/industrial utility vehicle.

In the above description a planetary gearing system has been described. However other known types of variable transmissions can be adopted and arranged between the actuator and the electric motor driving the actuator or arranged between the actuator and the internal combustion engine driving the actuator or arranged between the actuator and both the electric motor driving the actuator and the internal combustion engine driving the actuator in combination with the electric motor. In particular, other known types of continuously variable transmissions, i.e. transmissions which can change (substantially steplessly) through an infinite number of effective gear ratios between maximum and minimum values, can be used. The flexibility of a continuously variable transmission allows the rotor of the actuator to maintain a substantially constant angular speed over a range of speeds of the internal combustion engine. In general this can provide better fuel economy by enabling the various rotors to run at their most efficient speeds for a range of different operative situations.

**Claims**

1. An engine system comprising:

    - an internal combustion engine having a first rotor;
    - an electric motor-generator having a second rotor;
    - an actuator having a third rotor; and
    - a motion transmission system having at least three rotatable elements;

    **characterized in that** said first rotor is coupled with said motion transmission system through a first one of said at least three rotatable elements, said second rotor is coupled with said motion transmission system through a second one of said at least three rotatable elements, said third rotor is coupled with said motion transmission system through a third one of said at least three rotatable elements.

2. The system of claim 1, wherein said second rotor is coupled with said motion transmission system through said first rotatable element or through a second one of said at least three rotatable elements.

3. The system of claim 1 or 2, wherein said motion transmission system comprises a variable transmission system in which a transmission ratio between said first rotatable element and said third rotatable element varies as a function of a rotating speed of a second one of said at least three rotatable elements.

4. The system of any one of the preceding claims, further comprising a controller configured to control said second rotor according to a desired value or a desired range of values of a speed of said third rotor.

5. The system of any one of the preceding claims, further comprising a controller configured to control said electric motor-generator on the basis of one or more signals indicative of the speed of said first rotor and/or of said third rotor.

6. The system of any one of the preceding claims, further comprising a controller configured to perform the steps of receiving a value indicative of a transmission ratio between said first rotor and said third rotor and controlling said electric motor-generator on the basis of said transmission ratio value.

7. The system of any one of the preceding claims, wherein said motion transmission system comprises a planetary gearing system, said at least three rotatable elements including a sun gear, a planet carrier and a ring gear, said planet carrier holding one or more planet gears meshed with said sun gear and with said ring gear.

8. The system of any one of the preceding claims, wherein said second rotor is mechanically interposed between said third rotor and said motion transmission system.

9. The system of any one of the preceding claims, comprising a first electric generator configured to be mechanically driven by said third rotor and also to operate as a motor driving said actuator.

10. The system of claim 9, wherein said first electric generator is mechanically interposed between said actuator and said motion transmission system.

11. The system of claim 9 or 10, wherein said first electric generator is electrically connected to said electric motor-generator.

12. The system of any one of the preceding claims, comprising a second electric generator which is configured to be driven by said internal combustion engine and which is electrically connected to said electric motor-generator.

13. The system of any one of the preceding claims, comprising at least one clutch or brake operatively connected to said second rotor.

14. The system of any one of the preceding claims, comprising at least one electrical energy storing unit electrically connected to said electric motor-generator.

15. The system of any one of the preceding claims, wherein said actuator comprises a cooling device.

Fig. 1

EP 2 179 904 A1

Fig. 2

Fig. 3

Fig. 4

Fig. 5

Fig. 6

Fig. 7

EP 2 179 904 A1

EP 2 179 904 A1

EUROPEAN SEARCH REPORT

Application Number

EP 09 17 4055

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 89/11405 A (ANTONOV ROUMEN [FR]) 30 November 1989 (1989-11-30) * abstract * * page 5, line 19 - page 5, line 24 * * claims 5,13 * * figures 1-8 * | 1-14 | INV. B60W20/00 B60K6/48 B60K6/365 B60K6/40 B60K11/02 B60K17/28 |
| X | DE 198 01 160 A1 (BEHR GMBH & CO [DE]) 22 July 1999 (1999-07-22) * abstract * * column 2, line 48 - column 2, line 62 * * column 3, line 67 - column 4, line 60 * * claims 2,5,6 * * figures 1-5 * | 1-14 | B60K25/06 B60K1/02 F01P7/04 ADD. B60W10/06 B60W10/08 |
| X | EP 1 314 884 A (HONDA MOTOR CO LTD [JP]) 28 May 2003 (2003-05-28) * abstract * * paragraphs [0086], [0095] * * figures 1,2,7-17 * | 1-14 | |
| A | EP 1 002 940 A (BARUFFALDI SPA [IT]) 24 May 2000 (2000-05-24) * abstract * * paragraph [0043] * * claims 19,20 * * figures 12-15 * | 1,3,7, 14-15 | TECHNICAL FIELDS SEARCHED (IPC) F01P B60K B60W |

The present search report has been drawn up for all claims

| Place of search | Date of completion of the search | Examiner |
|---|---|---|
| The Hague | 4 February 2010 | Törgyekes, Szabolcs |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

16

**ANNEX TO THE EUROPEAN SEARCH REPORT
ON EUROPEAN PATENT APPLICATION NO.**

EP 09 17 4055

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2010

| Patent document cited in search report | | Publication date | Patent family member(s) | | Publication date |
|---|---|---|---|---|---|
| WO 8911405 | A | 30-11-1989 | AU | 624619 B2 | 18-06-1992 |
| | | | AU | 3681489 A | 12-12-1989 |
| | | | EP | 0414782 A1 | 06-03-1991 |
| | | | ES | 2015650 A6 | 01-09-1990 |
| | | | JP | 2894760 B2 | 24-05-1999 |
| | | | JP | 3505316 T | 21-11-1991 |
| | | | US | 5309778 A | 10-05-1994 |
| DE 19801160 | A1 | 22-07-1999 | DE | 19628576 A1 | 22-01-1998 |
| EP 1314884 | A | 28-05-2003 | CA | 2412069 A1 | 22-05-2003 |
| | | | JP | 3547735 B2 | 28-07-2004 |
| | | | JP | 2003220843 A | 05-08-2003 |
| | | | US | 2003094317 A1 | 22-05-2003 |
| EP 1002940 | A | 24-05-2000 | DE | 69923524 D1 | 10-03-2005 |
| | | | DE | 69923524 T2 | 16-02-2006 |
| | | | IT | MI982510 A1 | 19-05-2000 |
| | | | US | 6468163 B1 | 22-10-2002 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7134406 B1
- US 20080121195 A1